Europäisches Patentamt

European Patent Office

Office européen des brevets

(19)

(11) **EP 1 136 443 A1**

(12) ## EUROPEAN PATENT APPLICATION

(43) Date of publication:
26.09.2001 Bulletin 2001/39

(51) Int Cl.[7]: **C01B 3/36**, B01J 12/00,
B01J 19/24, F23C 6/04,
F23D 14/66, F23D 14/62

(21) Application number: 01106413.6

(22) Date of filing: 21.03.2001

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | • **Poloni, Alfredo**<br>**34070 Fogliano Redipuglia (Prov.Gorizia) (IT)**<br>• **Primavera, Alessandra**<br>**33100 Udine (IT)**<br>• **Milic, Ljuban**<br>**33100 Udine (IT)** |
| (30) Priority: **23.03.2000 IT MI000607** | |
| (71) Applicant: **DANIELI & C. OFFICINE MECCANICHE S.p.A.**<br>**33042 Buttrio (UD) (IT)** | (74) Representative: **Gervasi, Gemma, Dr.**<br>**Notarbartolo & Gervasi S.p.A.,**<br>**Corso di Porta Vittoria, 9**<br>**20122 Milano (IT)** |
| (72) Inventors:<br>• **Pavlicevic, Milorad**<br>**33100 Udine (IT)** | |

(54) **Gas and oxygen reactor and method for the production of reducing elements**

(57)    A natural gas and oxygen reactor (1) having a main combustion chamber (5) fed by two feeding ducts (2, 6), for natural gas (G1) and oxygen (O) which mix and combust in the pre-combustion chamber (4) placed between the feeding ducts (2, 6) and the main combustion chamber (5). A second gaseous mixture, made by natural gas (G2) and oxidising gas (S), is first mixed in a mixing chamber (3) coaxially surrounding the second chamber (4) and subsequently introduced in the main combustion chamber (5) wherein it mixes with the burnt gas coming out of the pre-combustion chamber (4) and undergoes the second combustion. The produced final gases, rich in reducing compounds are useful for the reduction of iron ores. A method for reduction of iron ores by means of a gas and oxygen reactor is also disclosed.

FIG. 1

EP 1 136 443 A1

## Description

Field of the invention

The present invention relates to a reactor for the production of a reducing gas, particularly for the direct reduction of iron ores and to a method for the production of reducing elements, particularly for the reduction of iron ores.

State of the art

Gas combustion reactors are generally used in metallurgical industry for the extraction of iron from iron ores or in chemical industry for the production of molecular hydrogen which is recovered by the products deriving from the reducing operation.

From patent US-A-4425159 gas combustion reactors including a combustion chamber wherein a hydrocarbon mixture is burnt in the presence of oxygen and of a cooling gas containing carbon dioxide and/or steam are well known. From the combustion of this mixture that takes place in the combustion chambers at temperatures comprised between 1200 and 1400°C, a chemically reducing gaseous mixture is produced.

Therefore, these well-known reactors have some drawbacks; for this reason, sometimes their use is not economical. A first drawback is connected to the combustion temperature that must be comprised between 1200°C and 1400°C; this helps to reduce the operating life of the reactor. Moreover, in many metallurgical applications, such as the reduction of iron ores it is advisable to work with gases at temperatures not exceeding 1000-1100°C, in order to avoid "sticking" problems, that is to say a partial sticking of the pellets.

The complete absence or insufficient implementation of a pre-mixing system of the gas mixture causes a second drawback. This causes an increase in the formation of soot that implies an increase in fuel consumption and in costs related to the purification of burnt gases.

A third drawback of these well-known reactors is caused by the need of using a Ni catalyst in order to improve the production of reducing gas.

US-A-5725366 describes a process and apparatus for oxygen-enriched combustion of natural gas for improving heat transfer and reducing $NO_x$ emissions. The structure of the apparatus suggested by this document is an improvement over other burners of the state of the art, it does not however solve the problem of producing, in a gas reactor, a reducing gas rich of components necessary to optimise reduction of iron ores.

Summary

Therefore, a primary object of the present invention is the overcoming of the above mentioned drawbacks of said well-known reactors manufacturing a gas combustion reactor for the production of a new kind of reducing gas having a higher efficiency.

Object of the present invention is to provide a reactor having a reliable transport of all the combustion gas mixture components.

A further object of the present invention is the substantial reduction of undesired combustion products thus avoiding expensive filtering operations.

Another object of the present invention is to eliminate the need of increasing the energetic potential of the reactor through a pressure, thus allowing the working at a lower pressure.

These objects are achieved by a gas and oxygen reactor comprising a pre-combustion chamber and a main combustion chamber communicating with and placed downstream of said pre-combustion chamber both provided with ignition means, first feeding ducts adapted for conveying a first flow of fuel gas and oxygen into said pre-combustion chamber for combusting said first flow, second feeding ducts adapted for respectively conveying a second flow of fuel gas and a flow of oxidising gas characterised in that said second feeding ducts are separate from the pre-combustion chamber along their extension and their respective downstream outlets lead directly into said main combustion chamber where mixing and combustion of said combusted first flow with said second flow of fuel gas and said flow of oxidising gas takes place.

The arrangement of the reactor providing for a separation between the pre-combustion chamber, where the combustion of a first flow of fuel gas with oxygen is performed, and two ducts respectively conveying a second flow of fuel gas and a flow of an oxidising gas, combined with the fact that these two ducts outflow directly in the main combustion chamber, ensures optimum mixing conditions and a gas temperature reaching the main combustion chamber in order to eliminate the need to use a catalyst downstream the reactor.

In an advantageous embodiment according to the invention, there is provided that both ducts or groups of ducts, for respectively conveying the second flow of fuel gas and the flow of oxidising gas, outflow in a pre-mixing chamber, without having any contact with the pre-combustion chamber, before flowing into the main combustion chamber where a further mixing of these gases with the combustion gas produced in the pre-combustion chamber occurs a subsequent combustion is performed. This embodiment improves further the mixing conditions of the gas mixtures to be combusted in the main combustion chamber.

In both embodiments, as the oxidising gas, entering the main combustion chamber is rich of $H_2O$ and/or $CO_2$ the reducing gas is rich of $H_2$ and CO. Another advantage provided for by the invention is the reduction of undesired gas emissions, polluting agents and soot.

According to a particular aspect of the present invention, a method for the production of reducing compounds by means of the above mentioned reactor comprising the following steps is also disclosed:

a) feeding of the reactor with a first portion of a hydrocarbon fuel gas with oxygen,
b) formation of a first mixture in a pre-combustion chamber,
c) combustion of said first mixture in said pre-combustion chamber, with the production of a combusted gas mixture,
d) feeding of the reactor with a second portion of fuel gas and a flow of oxidising gas containing $H_2O$ and/or $CO_2$,
e) introduction of said combusted gas mixture into a main combustion chamber,
f) introduction of said second portion of fuel gas and a flow of oxidising gas into said main combustion chamber,
g) mixing of said combusted gas mixture with said second portion of fuel gas and a flow of oxidising gas to form a second gas mixture,
h) combustion of said second gas mixture in order to form a reducing gas.

According to another particular aspect of the present invention, it is also contemplated a reducing composition produced according to the above mentioned method with the following composition: from 55 to 70% of $H_2$, from 25 to 35% of CO, from 1 to 8% of $H_2O$, from 1 to 3.5% of $CO_2$, from 0.2 to 1% of $CH_4$.

Brief description of figures

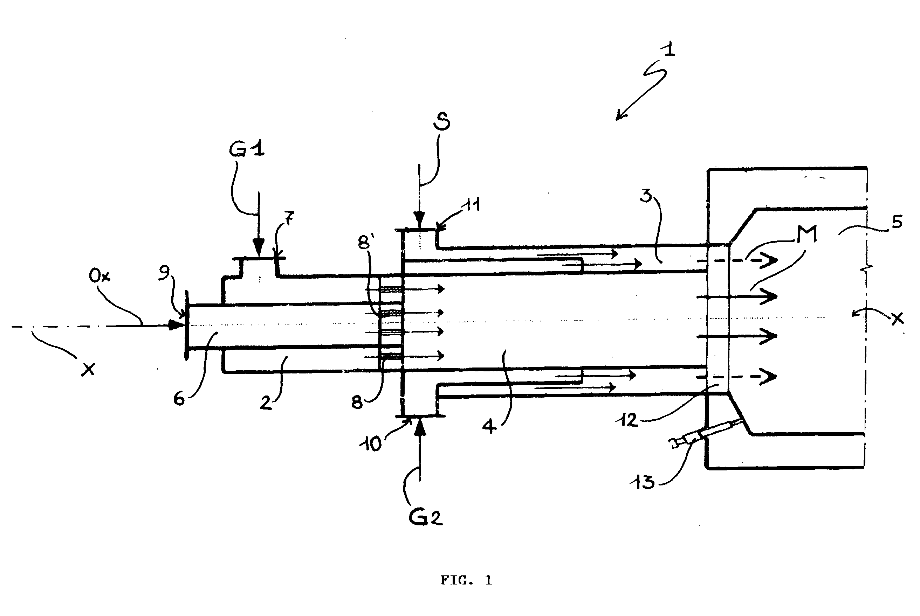

Further features and advantages of the invention will become apparent with reference to the detailed description of preferred but non exclusive embodiments of a reactor shown by way of non limitative example with the help of the enclosed drawing table wherein fig. 1 shows a sectional view on a plane passing through the longitudinal axis of the reactor according to the invention.

Detailed description of a preferred realisation form of the invention

With reference to the above mentioned figure, a reactor according to the present invention globally indicated by reference numeral 1, provides for a main structure having an elongated cylindrical shape of axis X-X comprising some cylindrical chambers 2, 3, 4, 5, 6 being coaxially placed to the common axis X-X in which various gaseous components of the combustion mixture respectively meet.

Chamber 2, which is fed with natural gas G1 through the opening 7, is equipped with a series of openings or exhaust nozzles putting the chamber into communication with the pre-combustion chamber 4 where ignition means not shown in the figure, such as a pilot flame, are also provided for. A pre-heating system of one or both gases can be also conveniently used. In this pre-combustion chamber 4 the mixing with the oxygen, which is conveyed through the opening 9, the pipe or chamber 6 and the openings 8', takes place.

In the mixing chamber 3 another flow of fuel gas G2 and a flow of oxidising gas S are introduced, respectively passing through the ducts 10 and 11 that communicate directly with the main combustion chamber 5. Likewise the pre-combustion chamber 4 communicates directly through the common area 12, with the main combustion chamber 5, without allowing previous contact between the combusted gases produced in the pre-combustion and the second flow of fuel gas (G2) and the flow of oxidising gas (S). In the main combustion 5 chamber, the final reaction is caused by the igniter 13 from which the production of the reducing mixture M, to be ejected on the iron ore, occurs. This inventive solution allows a good mixing action of the oxidising gas S with the fuel gas G1 and G2, heating of this mixture rich of $CO_2$ and/or $H_2O$ and its combustion to take place only in the main combustion chamber 5, together with the pre-combusted gas mixture made in the pre-combustion chamber 4.

In an embodiment according to this invention both ducts 10 and 11 outflow in an annular mixing chamber 3, where the fuel gas (G2) and the oxidising gas (S) mix before entering in the main combustion chamber 5.

Even though the concentric arrangement of the cylindrical-shaped chambers 2, 3, 4, 5, 6, shown in figure 1, is among the most functional and compact ones, it is meant that both their mutual arrangement and their shape, can be changed according to the needs and use requirements of the space wherein reactor 1 is used.

The various steps connected to the reaction taking place in the reactor are described in detail here below.

The oxygen which can be introduced into the reactor according to various purity levels changing from 95% to the metallurgical oxygen $O_2$, through the line 6, mixes with the mixture to be burnt having a hydrocarbon nature in the form of gas. The mixture is for example a natural gas, preferably methane ($CH_4$), but also other hydrocarbon gases can be used and in the pre-combustion chamber 4 the following reactions take place:

$$CH_4 + 2O_2 \Leftrightarrow CO_2 + 2H_2O$$

$$CH_4 + 3/2O_2 \Leftrightarrow CO + 2H_2O$$

$$CH_4 + 1/2O_2 \Leftrightarrow CO + 2H_2$$

These reactions are carried out with a volume ratio of natural gas/oxygen changing from 0.5 to 2.

The burnt gas composition changes according to the percentage of natural gas G1 introduced in pre-combustion chamber 4. In table 1 reported here below, trends of the gas composition produced in chamber 4 according to various stoichiometric conditions are reported.

| Elements composing the gas produced in pre-combustion chamber 4 and its percentages **(in volume)** | Ratio of the mixture ($CH_4/O_2$) introduced in pre-combustion chamber 4 | |
|---|---|---|
| | 2 | 0,5 |
| $CO_2$ | 5% | 33% |
| $H_2O$ | 8% | 67% |
| CO | 22% | ≈0% |
| $H_2$ | 60% | ≈0% |
| $CH_4$ | 5% | ≈0% |

In mixing chamber 3 natural gas together with an oxidiser are simultaneously introduced in order to carry out the mixing. As an oxidiser steam, exhaust gases or recycling gases rich in $CO_2$ and/or $H_2O$, etc. can be advantageously used. This first mixture reaching a high mixing level, as the main function of controlling the temperature of the final mixture M producing in the main combustion chamber 5 and also the thermal reforming of the natural gas through $CO_2$ and $H_2O$. This operation takes place thanks to the passage directly in the main combustion chamber 5 of the gas G2 and of the oxidising gas S or, in the embodiment where there is provided a mixing chamber for these two gases, of the mixture produced in the mixing chamber 3, and of the mixture made of burnt gases, produced in the pre-combustion chamber 4. In the main combustion chamber 5 these two mixtures mix up and their combustion takes place. In such a way, a typical reforming reaction is produced optimally from which a series of products are obtained.

Endothermic reactions produced in the main combustion chamber 5 are reported here below:

$$CH_4 + H_2O \Leftrightarrow CO + 3H_2$$

$$CH_4 + CO_2 \Leftrightarrow 2CO + 2H_2$$

Experimental conditions related to the ratio between oxidiser and reducing agent, that is to say to the ratio $(CO_2 + H_2O)/CH_4$ are chosen in such a way to prevent the natural gas cracking, namely in order to avoid the reaction $(CH_4 \Leftrightarrow C + 2H_2)$.

According to the invention a reducing gas M is obtained wherein the presence of soot is not significant. Moreover, the negligible quantity of soot eventually formed is gasified thanks to the following reactions:

$$C + CO_2 \Leftrightarrow 2CO$$

$$C + H_2O \Leftrightarrow CO + H_2$$

being greatly favoured by high temperatures, exceeding 1000°C.

The final reducing gas M produced in the main combustion chamber 5 has the following composition:

| Component | Percentage (%) |
|---|---|
| $H_2$ | 60-67 |
| CO | 25-35 |
| $H_2O$ | 1-7 |
| $CO_2$ | 1-3 |
| $CH_4$ | 0.2-1 |

As one can see, the presence of reducing components in gas M exceeds 89%, making it particularly suitable for the reduction of iron ores. This high efficiency in the production of reducing components is due to the particular building features of the reactor according to the present invention. The pre-combustion chamber 4 provided for the natural gas makes the temperature increase more gradually thus obtaining a better mixing of the oxygen with the natural gas. The subsequent direct introduction of this product, together with the mixture obtained in chamber 3, in the main combustion chamber 5 in which the reforming endothermic reactions take place, acts in such a way that in this chamber the burnt gas temperature is comprised between 900 and 1100°C.

As an example, data concerning an advantageous working situation of the reactor are reported here below:

State of the gas when introduced:

| Gas | Ref. in figure | Temperature | Quantity |
|---|---|---|---|
| $CH_4$ | G | 300°C | 1 $Nm^3$/h |
| $O_2$ | O | 300°C | 0.6 $Nm^3$/h |
| $H_2O$ | S | 300°C | 0.1 $Nm^3$/h |

Composition of the gas when exiting the reactor:

| Component | Percentage (%) |
|---|---|
| $H_2$ | 59.7 |
| CO | 28.7 |
| $H_2O$ | 7.4 |
| $CO_2$ | 3.2 |
| $CH_4$ | 0.9 |
| T (°C) | 950 |

**Claims**

1. A gas and oxygen reactor (1) comprising a pre-combustion chamber (4) and a main combustion chamber (5) communicating with and placed downstream of said pre-combustion chamber (4), both provided with ignition means, first feeding ducts (2, 6) adapted for conveying a first flow of fuel gas (G1) and oxygen (O) into said pre-combustion chamber (4) for combusting said first flow, second feeding ducts (10, 11), adapted for respectively conveying a second flow of fuel gas (G2) and a flow of oxidising gas (S) **characterised in that** said second feeding ducts (10, 11 ) are separate from the pre-combustion chamber (4) along their extension and their respective downstream outlets lead directly into said main combustion chamber (5) where mixing and combustion of said combusted first flow with said second flow of fuel gas (G2) and said flow of oxidising gas (S) takes place.

2. A reactor according to claim 1, wherein said second feeding ducts (10,11) lead into a mixing chamber (3) where mixing of said flow of oxidising gas (S) with said second flow of fuel gas (G2) occurs and said mixing chamber (3) directly outflows into the main combustion chamber (5)

3. A reactor according to claim 2, wherein said first feeding ducts comprise two coaxial ducts (2, 6) leading in said pre-combustion chamber (4).

4. A reactor according to claim 3 wherein said mixing chamber (3) surrounds coaxially said second chamber (4).

5. A reactor according to claim 4, **characterised by** the fact that said main combustion (5) and pre-combustion (4) chambers are substantially cylindrical-shaped and are coaxially arranged one after the other.

6. A method for the production of reducing compounds by means of the reactor according to any of claims 1 to 5 comprising the following steps:

a) feeding of the reactor with a first portion of a hydrocarbon fuel gas (G1) with oxygen (O),
b) formation of a first mixture in a pre-combustion chamber (4),
c) combustion of said first mixture in said pre-combustion chamber (4), with the production of a combusted gas mixture,
d) feeding of the reactor with a second portion of fuel gas (G2) and a flow of oxidising gas (S) containing $H_2O$ and/or $CO_2$,
e) introduction of said combusted gas mixture into a main combustion chamber (5)
f) introduction of said second portion of fuel gas (G2) and flow of oxidising gas (S) in said main combustion chamber (5)
g) mixing of said combusted gas mixture with said second portion of fuel gas (G2) and flow of oxidising gas (S) to form a second gas mixture,
h) combustion of said second gas mixture in order to form a reducing gas.

7. A method according to claim 6, comprising, previously to the said step f), the further step of mixing in a second mixing chamber (3), separated from the pre-combustion chamber (4), said second flow of fuel gas (G2) and said flow of oxidising gas (S) in order to form a third gas mixture that is fed subsequently into the main combustion chamber (5).

8. A method according to claim 7, comprising the further step of introducing said fuel gas (G1, G2) into the reactor at a temperature lower than the one in which cracking reactions are started, according to the kind of fuel used.

9. A method according to claim 8, comprising the further step of introducing said fuel gas (G1, G2) into the reactor at a temperature comprised between room temperature and 600°C.

10. A method according to claim 9, comprising the further step of introducing said fuel gas (G1, G2) into the reactor at a temperature comprised in the range between 200 and 400°C.

11. A method according to one or more of the claims from 6 to 10, comprising the further step of introducing into the reactor said first portion of fuel gas (G1) and the oxygen (O) with a stoichiometric ratio variable between 2 and 0.5.

12. A method according to one or more of the claims from 6 to 11, wherein said fuel gas (G1, G2) is a natural gas.

13. A method according to one or more of the claims from 6 to 12, wherein said fuel gas (G1, G2) is methane.

14. A method according to one or more of the claims from 6 to 13, **characterised by** the fact of using said reducing gas for the reduction of iron ores.

15. A reducing composition produced according to the method of claims from 6 to 14, **characterised by** the following percentage composition in volume from 55 to 70% of $H_2$, from 25 to 35% of CO, from 1 to 8% of $H_2O$, from 1 to 3.5% of $CO_2$, from 0.2 to 1% of $CH_4$.

16. Use of the composition according to claim 15 for the reduction of iron ores.

FIG. 1

**European Patent Office**

**EUROPEAN SEARCH REPORT**

Application Number

EP 01 10 6413

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 997 596 A (TESTER MARVIN E ET AL) 7 December 1999 (1999-12-07) * column 7, line 6 - column 13, line 17 * * figures 3-6 * | 1-7 | C01B3/36 B01J12/00 B01J19/24 F23C6/04 F23D14/66 F23D14/62 |
| D,X | US 5 725 366 A (ABBASI HAMID A ET AL) 10 March 1998 (1998-03-10) * figures 1-3 * | 1-5 | |
| X | DE 19 11 606 A (H. BOCKHORN) 24 September 1970 (1970-09-24) * table 2 * | 15,16 | |
| A | EP 0 009 523 A (EXXON RESEARCH ENGINEERING CO) 16 April 1980 (1980-04-16) * page 2, paragraph 1 * * page 6 - page 8 * * page 14 - page 17 * * claims; figures 1,1A * | 1,6,7, 12-16 | |
| A | WO 96 36680 A (HYDROGEN BURNER TECHN INC) 21 November 1996 (1996-11-21) * page 27, paragraph 3 - page 30, paragraph 1 * * figure 7 * | 1,6 | TECHNICAL FIELDS SEARCHED (Int.Cl.7) C01B F23C F23D |
| A | EP 0 643 013 A (BOC GROUP INC) 15 March 1995 (1995-03-15) * claims; examples 1,2 * | 1,6 | |
| A | GB 2 187 751 A (SHELL INT RESEARCH) 16 September 1987 (1987-09-16) * the whole document * | 1,6 | |

The present search report has been drawn up for all claims

| Place of search | Date of completion of the search | Examiner |
|---|---|---|
| THE HAGUE | 9 July 2001 | Van der Poel, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 01 10 6413

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2001

| Patent document cited in search report | | Publication date | Patent family member(s) | | Publication date |
|---|---|---|---|---|---|
| US 5997596 | A | 07-12-1999 | AU | 728931 B | 18-01-2001 |
| | | | AU | 9472598 A | 22-03-1999 |
| | | | BR | 9812052 A | 26-09-2000 |
| | | | EP | 1017619 A | 12-07-2000 |
| | | | WO | 9911571 A | 11-03-1999 |
| US 5725366 | A | 10-03-1998 | CA | 2247819 A | 04-09-1997 |
| | | | DE | 69701678 D | 18-05-2000 |
| | | | DE | 69701678 T | 10-08-2000 |
| | | | EP | 0883777 A | 16-12-1998 |
| | | | JP | 2000506255 T | 23-05-2000 |
| | | | WO | 9732162 A | 04-09-1997 |
| DE 1911606 | A | 24-09-1970 | BE | 749295 A | 01-10-1970 |
| EP 0009523 | A | 16-04-1980 | JP | 55050085 A | 11-04-1980 |
| | | | DE | 2862260 D | 07-07-1983 |
| WO 9636680 | A | 21-11-1996 | US | 5546701 A | 20-08-1996 |
| EP 0643013 | A | 15-03-1995 | US | 5714132 A | 03-02-1998 |
| | | | ZA | 9405891 A | 13-06-1995 |
| GB 2187751 | A | 16-09-1987 | NONE | | |

EPO FORM P0459

For more details about this annex : see Official Journal of the European Patent Office, No. 12/82